# FASCICULE DE BREVET EUROPEEN

(11) **EP 3 510 302 B1**
(45) Date de publication et mention de la délivrance du brevet: **17.03.2021**
(21) Numéro de dépôt: 17758601.3
(22) Date de dépôt: 04.08.2017
(51) Int. Cl.: F16F 1/38

(54) **PLATINE SUPPORT AVEC FILTRAGE DE VIBRATIONS D'UN VENTILATEUR, ECHANGEUR DE CHALEUR, CONDENSEUR SUR UN ELEMENT STRUCTUREL DU CORPS D'UN APPAREIL OU VEHICULE A MOTEUR ET PROCEDE DE FABRICATION**
SCHWINGUNGSDÄMPFUNGSVORRICHTUNG ZUM LAGERN EINES LÜFTERS, WÄRMETAUSCHERS, KONDENSERS AUF EINEM STRUKTUR-BAUTEILS EINES GERÄTS ODER EINES KRAFTFAHRZEUGES UND VERFAHREN ZUR HERSTELLUNG DER VORRICHTUNG
SUPPORT ELEMENT AND VIBRATION DAMPENING ELEMENT OF A COOLER, HEAT-EXCHANGER, CONDENSER ON A STRUCTURAL ELEMENT OF A DEVICE OR MOTOR DRIVEN VEHICLE AND PROCESS FOR MANUFACTURING SUPPORT ELEMENT

(30) Priorité: 07.09.2016 FR 1658313
(43) Date de publication de la demande: 17.07.2019
(73) Titulaire: SumiRiko SD France S.A.S., 58300 Decize (FR)
(72) Inventeur: SENNEPIN, Sébastien, 58390 Dornes (FR); RENARD, Franck, 58000 Saint Eloi (FR); SKIERA, Jean-François, 58340 Cercy La Tour (FR)
(74) Mandataire: Ernest Gutmann - Yves Plasseraud S.A.S.
(86) Numéro de dépôt international: PCT/FR2017/052199
(87) Numéro de publication internationale: WO 2018/046813

(56) Documents cités:
- DE-A1-102010 024 903
- JP-A- 2003 074 635
- JP-A- 2011 214 626
- KR-B1- 100 902 736

## Description

L'invention concerne le domaine des platines supports avec filtrage de vibrations d'un élément fonctionnel - ventilateur, échangeur de chaleur, condenseur - sur un élément structurel du corps d'un engin - appareil ou véhicule à moteur -.

Le document EP 1 841 612 décrit une telle platine qui s'étend parallèlement à un plan principal orthogonal à une direction axiale. Elle présente une symétrie d'ensemble par rapport au plan principal médian. Elle comporte un élément extérieur, périphérique, rigide, en forme de plaque et un élément intérieur, médian, ayant une tenue d'ensemble, en caoutchouc élastiquement déformable, de forme plate.

L'élément extérieur est apte et destiné à être fixé à l'élément structurel du corps d'un engin - appareil ou véhicule à moteur -, tandis que l'élément intérieur est apte et destiné à recevoir un pion ou une pièce analogue de direction axiale, d'un élément fonctionnel - ventilateur, échangeur de chaleur, condenseur - ou associée à un tel élément fonctionnel.

L'élément extérieur est limité de part et d'autre par une première grande face et une seconde grande face, planes ou d'enveloppes planes. Il comporte un trou traversant de direction axiale, limité par un chant intérieur annulaire. Ce chant intérieur comporte deux échancrures localisées.

Une telle échancrure a en élévation une forme générale en pointe de flèche. Elle comporte une ouverture radiale, ainsi qu'une première ouverture axiale et une seconde ouverture axiale. La première ouverture axiale et la seconde ouverture axiale sont identiques. Elles sont situées, respectivement vers la première grande face et la seconde grande face de l'élément extérieur.

La première ouverture axiale et la seconde ouverture axiale de l'échancrure sont totalement découvertes et intégralement accessibles dans la direction axiale.

L'élément intérieur est limité lui-aussi de part et d'autre par une première surface et une seconde surface, planes ou d'enveloppes planes. Il comporte un noyau central de forme annulaire avec un passage traversant apte et destiné à recevoir le pion ou la pièce analogue. Le noyau central est limité par un chant extérieur. Sur ce chant extérieur est prévu, d'une part, un renflement localisé et, d'autre part, un prolongement sous la forme de deux bras étendus sensiblement radialement. Chacun de ces bras est pourvu à son extrémité distale opposée au noyau central d'une protubérance terminale en forme générale de pointe de flèche.

L'élément intérieur est logé dans le trou de l'élément extérieur. La première grande face, la seconde grande face, de l'élément extérieur et, respectivement, la première surface, la seconde surface, de l'élément intérieur sont coplanaires. L'élément intérieur et l'élément extérieur ont, en direction axiale, une même épaisseur ou des épaisseurs très voisines.

En l'absence de contraintes extérieures supérieures à un certain plafond, le renflement est écarté du chant intérieur de l'élément extérieur.

L'échancrure et la protubérance conjuguée ont des formes complémentaires et coopèrent de sorte que l'élément intérieur et l'élément extérieur soient solidarisés.

A cet effet, le document EP 1 841 612 prévoit une première réalisation dans laquelle l'élément extérieur et l'élément intérieur sont réalisés par moulage bi-matière et une seconde réalisation alternative avec simple emmanchement avec complémentarité de forme de l'échancrure et de la protubérance conjuguées.

On connaît également une autre réalisation d'une telle console dans laquelle l'élément extérieur et l'élément intérieur sont solidarisés par collage de l'échancrure et de la protubérance conjuguée.

Le document JP 2011 214626 pose le problème de supprimer la détérioration de la performance et réduire la durée de vie d'un corps élastique, ainsi que pour empêcher le glissement d'un corps d'un support d'un support. Il propose un dispositif de commande de vibration qui comprend: un support attaché à l'une quelconque d'une partie génératrice de vibration et d'une partie de réception de vibration ; et un élément de corps avec un corps élastique relié à une partie de montage montée sur l'autre de la partie de génération de vibration et de la partie de réception de vibration. Ce corps élastique est pourvu de branches extensibles faisant saillie vers le support et des parties de montage prévues aux extrémités des jambes. Le support est formé avec une partie cylindrique s'étendant horizontalement et ajustant l'élément de corps à l'intérieur.

Le document JP2003074635 pose le problème de fournir un dispositif de support vibro-isolant qui permet la récupération classifiée et le recyclage des pièces en tant que ressources après le rejet. Il propose un dispositif de support vibroisolant qui comprend un premier élément de montage relié à un corps de support ou à un corps supporté, un second élément de montage disposé autour du premier élément de montage et relié à l'autre du corps de support et au corps supporté et une jambe élastique en matériau élastique, comme le caoutchouc, reliée au premier élément de montage et prolongée vers le deuxième élément de montage. Le deuxième élément de montage comprend une base et un support accouplés de manière libérable par des anneaux de montage, et la base et le support sont constitués d'une résine synthétique mélangée à des fibres de renforcement. Des parties en saillie empêchant le déplacement sont formées aux extrémités de la partie élastique et sont maintenues contre un déplacement entre la base et le support.

Le document KR100 902 736 décrit une structure de montage du moteur des véhicules qui améliore l'assemblage et comprend un support qui est formé sous la forme recouvrant une partie en caoutchouc et une partie en forme de coin formée entre la partie en caoutchouc et le support. La partie en coin comprend un guide moulé intégralement dans la fabrication de la partie en caoutchouc et un rail de guidage qui est formé entre parenthèses pour faire face au guide. Le guide est constitué d'une tôle d'acier ayant une épaisseur prédéterminée.

Le document DE 10 2010 024903 décrit un dispositif de positionnement élastique d'un moteur sur une carrosserie, comprenant un support rigide avec une portion d'appui et une portion de montage, une bague de flasque rigide qui entoure la portion d'appui et un corps de ressort qui s'appuie sur la portion d'appui et sur la bague, un insert rigide fixé sur son côté de bague de flasque et/ou sur son côté de support au moyen d'une structure à ergot réalisée par au moins une protubérance avec une contre-dépouille sur le côté de bague de flasque et/ou sur son côté de support et par au moins une cavité de forme complémentaire à la protubérance avec un rétrécissement.

Le document JP 2009 243483 décrit une tige de couple de résine, une pièce de caoutchouc vulcanisée de la petite douille est assemblée dans un tube extérieur pour la petite douille d'un corps de tige de couple de résine et une partie de caoutchouc vulcanisée de la grande douille ayant un alésage traversant de direction axiale. Il est prévu un tube extérieur pour la grande douille par ajustement de pression. Il est prévu un corps de recouvrement métallique fixé à une ouverture dans une direction axiale du tube extérieur pour la grande douille et la partie en caoutchouc vulcanisée de la grande douille est empêchée par le corps de recouvrement de sortir du tube extérieur.

L'invention vise à proposer une autre réalisation qui ne présente pas les inconvénients ou les limites du moulage bi matière, du simple emmanchement, ou du collage, tout en garantissant une cohésion satisfaisante de l'élément extérieur et de l'élément intérieur.

Ci-après, un exposé de l'invention telle que caractérisée.

Selon un premier aspect, l'invention a pour objet une platine support avec filtrage de vibrations d'un élément à supporter, qui s'étend parallèlement à un plan principal orthogonal à une direction axiale, telle que :
- un élément extérieur, périphérique, rigide, en forme de plaque, est limité par deux grandes faces et comporte un trou traversant limité par un chant intérieur annulaire comportant au moins une échancrure localisée ayant une ouverture radiale, une première et une seconde ouvertures axiales vers les grandes faces respectives, un chant périphérique s'étendant en direction axiale ayant un premier et un second bords vers les première et seconde ouverture, respectives,
- un élément intérieur, médian, ayant une tenue d'ensemble et au moins pour partie élastiquement déformable, de forme plate, est limité par deux grandes surfaces et comporte un noyau central de forme annulaire avec un passage traversant limité par un chant extérieur, et au moins un bras étendu sensiblement radialement avec une protubérance terminale,
- l'élément intérieur est logé dans le trou alors que la protubérance est logée dans l'échancrure conjuguée, au contact de son chant par complémentarité de forme, et que l'élément extérieur et l'élément intérieur forment un ensemble indissociable.
- faisant corps avec l'élément extérieur, un premier moyen de blocage axial vers l'extérieur et un second moyen de blocage axial vers l'extérieur, situés respectivement vers les deux grandes faces, ont des zones actives de blocage respectives écartées en direction axiale d'une distance en correspondance avec l'épaisseur de la protubérance en direction axiale,
- les zones actives du premier moyen de blocage et du second moyen de blocage sont, respectivement, disposées au droit, dans la direction axiale, de la première ouverture et de la seconde ouverture de l'échancrure,
- une fois la protubérance logée dans l'échancrure conjuguée, au contact de son chant, les deux grandes surfaces de la protubérance sont bloquées en direction axiale par les zones actives des moyens de blocage.

Cette platine est telle que les projections sur le plan principal du premier moyen de blocage et du second moyen de blocage sont au moins partiellement décalées l'une de l'autre, plus particulièrement totalement ou presque totalement décalées l'une de l'autre, plus spécialement écartées l'une de l'autre.

Selon les réalisations, la première ouverture, la seconde ouverture de l'échancrure est découverte et accessible en direction axiale D pour au moins 60%, plus particulièrement au moins 70%, plus spécialement au moins 80% de son aire, et masquée en direction axiale D par le premier moyen de blocage, le second moyen de blocage, pour au plus 40%, plus particulièrement au plus 30%, plus spécialement au plus 20% de son aire.

Selon une réalisation, la zone active du premier moyen de blocage ou du second moyen de blocage est attenante au bord de l'ouverture axiale conjuguée. Ainsi, selon les réalisations, la zone active du premier moyen de blocage ou du second moyen de blocage est attenante à une portion du bord de l'ouverture axiale conjuguée, au plus égale à 40%, plus particulièrement au plus 30%, plus spécialement au plus 20% de la longueur de ce bord.

Selon une possibilité, l'un ou l'autre - ou l'un et l'autre - des moyens de blocage est en une partie. Selon une possibilité, l'un ou l'autre - ou l'un et l'autre - des moyens de blocage est en plusieurs parties. Dans une réalisation, l'un des moyens de blocage est en une partie et l'autre des moyens de blocage est en deux parties.

Selon une réalisation, chacune des deux grandes faces de l'élément extérieur et la surface homologue de l'élément intérieur sont coplanaires ou situées dans deux plans voisins.

Selon une caractéristique, un moyen de blocage comprend une zone active ponctuelle, ou une zone active linéaire, ou une zone active surfacique, ou une combinaison de celles-ci, avec contact avec la protubérance vers sa grande surface conjuguée.

Selon une possibilité, le contact entre une zone active d'un moyen de blocage et la protubérance est un contact sur sa grande surface conjuguée elle-même sans pénétration ou sans pénétration substantielle. Selon une autre possibilité, le contact entre une zone active d'un moyen de blocage et la protubérance est un contact sur sa grande surface conjuguée elle-même avec pénétration substantielle dans cette surface.

Selon une réalisation, un moyen de blocage est agencé de façon sensiblement symétrique par rapport à un plan radial médian du bras, de la protubérance et de l'échancrure.

Selon une réalisation, la partie ou l'une des parties d'un moyen de blocage est une excroissance en languette saillante, mince et rigide de l'élément extérieur vers sa grande face conjuguée.

Selon une possibilité, l'excroissance en languette saille légèrement vers l'extérieur de sa grande face conjuguée de l'élément extérieur. Selon une autre possibilité, l'excroissance en languette est coplanaire ou sensiblement coplanaire de sa grande face conjuguée de l'élément extérieur.

Selon une réalisation, l'excroissance en languette a en élévation axiale un contour de forme simili polygonale comme un rectangle, un trapèze, ou un triangle.

Selon une possibilité, le plan enveloppe de la zone active d'un moyen de blocage est situé dans ou sensiblement dans le plan de la grande face conjuguée de l'élément extérieur. Selon une autre possibilité, le plan enveloppe de la zone active d'un moyen de blocage est écarté vers l'intérieur par rapport au plan de la grande face conjuguée de l'élément extérieur. Selon une réalisation, le plan enveloppe de la zone active de l'un des moyens de blocage est situé dans ou sensiblement dans le plan de la grande face conjuguée de l'élément extérieur et le plan enveloppe de la zone active de l'autre des moyens de blocage est écarté vers l'intérieur par rapport au plan de la grande face conjuguée de l'élément extérieur.

Selon une réalisation, une échancrure comporte une ouverture radiale rétrécie, de sorte que les deux parties du chant de l'échancrure adjacentes à l'ouverture radiale, de part et d'autre, forment des butées radiales, de sorte qu'une fois la protubérance logée dans l'échancrure conjuguée, elle est bloquée radialement vers l'intérieur et ne peut se désengager radialement de l'échancrure.

Selon les cas, il est prévu une pluralité p d'échancrures, une même pluralité p de bras à protubérance et une même pluralité p de premiers moyens de blocage et de seconds moyens de blocage, en particulier p égale deux. En particulier, deux échancrures et deux bras à protubérance ont un écartement angulaire de l'ordre de 90°.

Dans le cas d'une pluralité de bras et de moyens de blocage et dans une réalisation, les différents premiers moyens de blocage de la pluralité de premiers moyens de blocage et les différents seconds moyens de blocage de la pluralité de seconds moyens de blocage sont situés, respectivement, vers la première grande face et la seconde grande face.

Selon une réalisation, le chant extérieur du noyau central comporte au moins un renflement localisé, simple ou multiple qui, en l'absence de contraintes extérieures supérieures à un certain plafond, est légèrement écarté du chant intérieur de l'élément extérieur. En particulier, il est prévu un renflement localisé entre deux bras adjacents.

Selon une réalisation, l'élément extérieur et l'élément intérieur ont des épaisseurs en direction axiale identiques ou voisines.

Selon une réalisation, un bras de l'élément intérieur comporte un renflement précédent la protubérance.

Selon un deuxième aspect, l'invention a pour objet un élément spécialement apte et destiné à constituer l'élément extérieur d'une platine support avec filtrage de vibrations, telle qu'elle vient d'être décrite.

Cet élément :
- est rigide, en forme de plaque et s'étend parallèlement à un plan principal orthogonal à une direction axiale,
- est limité par deux grandes faces et comporte un trou traversant limité par un chant intérieur annulaire comportant au moins une échancrure localisée ayant une ouverture radiale, une première et une seconde ouvertures axiales vers les grandes faces respectives, un chant périphérique s'étendant en direction axiale ayant un premier et un second bords vers les première et seconde ouverture, respectives,
- comporte, faisant corps avec lui, un premier moyen de blocage axial vers l'extérieur et un second moyen de blocage axial vers l'extérieur, situés respectivement vers les deux grandes faces, et ont des zones actives de blocage respectives écartées en direction axiale, les zones actives du premier moyen de blocage et du second moyen de blocage étant, respectivement, disposées au droit, dans la direction axiale, de la première ouverture et de la seconde ouverture de l'échancrure

Cet élément est tel que les projections sur le plan principal du premier moyen de blocage et du second moyen de blocage sont au moins partiellement décalées l'une de l'autre, plus particulièrement totalement ou presque totalement décalées l'une de l'autre, plus spécialement écartées l'une de l'autre.

Selon un troisième aspect, l'invention a pour objet un procédé de réalisation d'une platine support avec filtrage de vibrations, telle qu'elle vient d'être décrite. Dans ce procédé :
- on réalise ou on dispose d'un élément extérieur,
- on réalise ou on dispose d'un élément intérieur,
- on loge le noyau central de l'élément intérieur dans le trou de l'élément extérieur, on comprime élastiquement la protubérance et on la loge dans l'échancrure conjuguée,
- on laisse la protubérance se détendre élastiquement de sorte à être bloquée en direction axiale par les zones actives des moyens de blocage.

Selon une réalisation, on comprime élastiquement la protubérance et on la loge dans l'échancrure conjuguée, par passage à force en direction axiale de sorte à passer au-delà du moyen de blocage avec lequel elle interfère.

On décrit maintenant brièvement les figures des dessins.

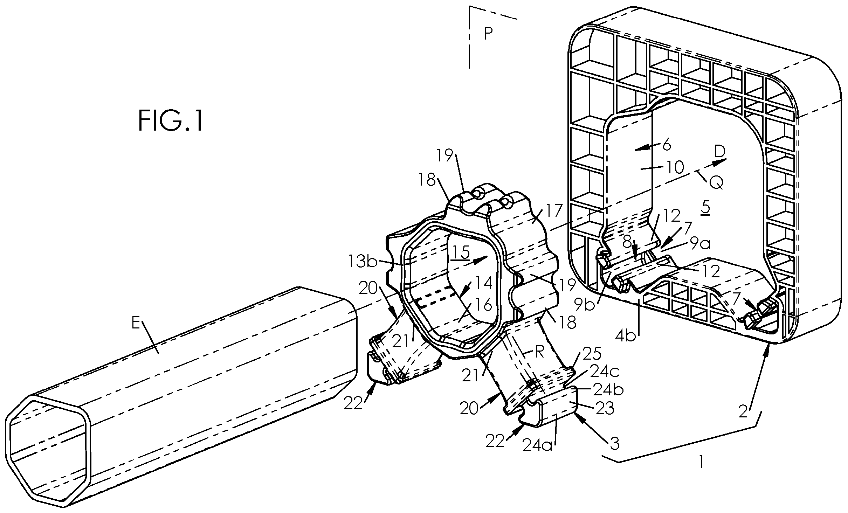

La FIG.1 est une vue en perspective éclatée d'une réalisation possible de platine support avec filtrage de vibrations selon l'invention destinée à un élément à supporter.
La FIG.2 est une vue partielle à plus grande échelle, pour partie coupée, de la platine support avec filtrage de vibrations, selon un angle de vue.
La FIG.3 est une vue partielle à plus grande échelle d'une portion III de la FIG.2.
La FIG.4 est une vue partielle à plus grande échelle, pour partie coupée, de la platine support avec filtrage de vibrations, selon un autre angle de vue.
La FIG.5 est une vue partielle à plus grande échelle d'une portion V de la FIG.2.

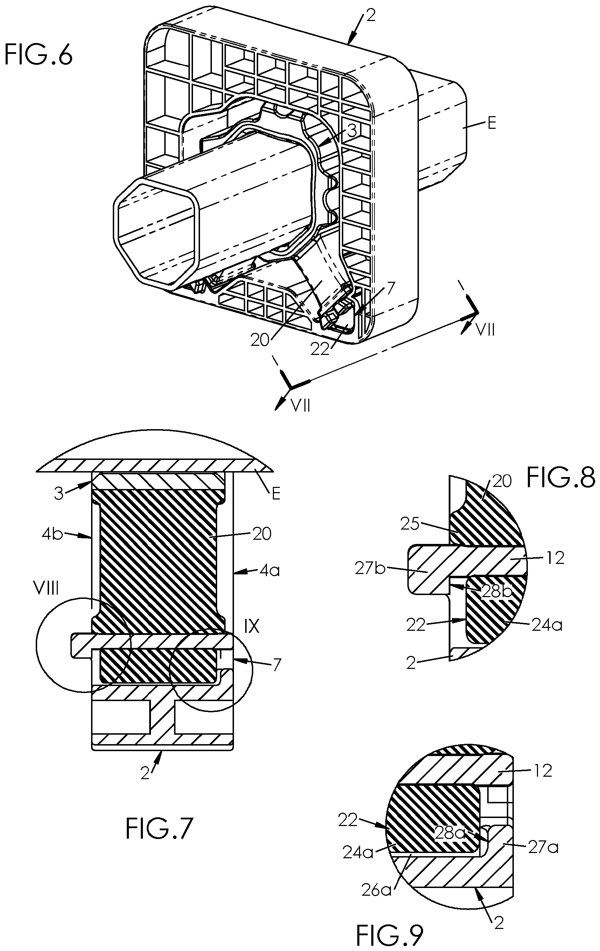

La FIG.6 est une vue en perspective de la réalisation de la FIG.1, la platine support avec filtrage de vibrations étant montée, avec présence de l'élément à supporter.
La FIG.7 est une vue en coupe selon la ligne VII-VII de la FIG.6.
Les FIG.8 et FIG.9 sont deux vues partielles à plus grande échelle des portions VIII et IX de la FIG.7.

Ci-après un exposé détaillé de plusieurs modes de réalisation de l'invention assorti d'exemples et de référence aux dessins.

Une platine support avec filtrage de vibrations 1 (parfois désignée par la suite par ellipse « platine ») d'un élément à supporter E, peut être utilisée notamment avec un élément fonctionnel - comme étant ou comprenant un ventilateur, un échangeur de chaleur, un condenseur - devant être supporté par un élément structurel rigide du corps d'un engin - comme un appareil ou un véhicule à moteur -.

Une telle platine 1 s'étend parallèlement à un plan principal P orthogonal à un axe médian Q, de direction axiale D.

La platine 1 comporte un élément extérieur 2 et un élément intérieur 3 associés l'un avec l'autre de sorte à former, une fois associés un ensemble indissociable.

L'invention porte aussi bien sur la platine 1 montée avec les éléments extérieur 2 et intérieur 3 associés, que sur la platine 1 avant montage, les éléments 2 et 3 étant alors dissociés l'un de l'autre.

D'autre part, l'invention porte sur l'élément extérieur 2 en tant que tel.

L'élément extérieur 2 est périphérique, rigide et en forme de plaque 2a. Cette plaque 2a peut avoir un contour extérieur de forme simili polygonale, comme un carré ou un rectangle, cette forme n'étant pas limitative.

Par le préfixe « simili », il faut comprendre que ce qui est ainsi qualifié a la forme associée au préfixe ou bien une forme plus ou moins voisine ou dérivée.

Le cas échéant, la plaque 2a comporte des moyens propres à assurer sa fixation.

L'élément extérieur 2 est limité d'un côté et de l'autre, par deux grandes faces 4a et 4b. Dans la réalisation représentée sur les figures, ces faces 4a, 4b, sont des plans enveloppes de la plaque 2a, laquelle comporte des nervures de rigidifications.

L'indice a et l'indice b associés à la référence numérique 4 des grandes faces de l'élément extérieur 2 se réfèrent respectivement à un premier côté et à un second côté de l'élément extérieur 2. Il en est de même pour d'autres parties de la platine 1 décrites par la suite.

L'élément extérieur 2 comporte un trou 5, traversant, d'axe Q.

Le trou 5 occupe une partie substantielle de la plaque 2a, devant être assez grand pour recevoir l'élément intérieur 3.

Le trou 5 est limité par un chant intérieur annulaire 6.

Le chant intérieur 6 peut avoir un contour de forme simili polygonale, comme une sorte de carré à coins cassés ou arrondis, ces formes n'étant pas limitatives.

Le chant 6 - et donc l'élément extérieur 2 - comporte deux échancrures localisées 7, ménagées dans la plaque 2a, disposées dans la réalisation représentée sur les figures avec un écartement angulaire par rapport à l'axe Q, de l'ordre de 90°, étant situées dans deux angles intérieurs du chant intérieur 6.

Ces deux échancrures 7 sont analogues et pour cette raison la description est faite pour l'une quelconque des deux.

L'invention n'est pas limitée à cette réalisation à deux échancrures 7. Il peut être envisagé que l'élément extérieur 2 ne comporte qu'une seule échancrure 7 ou bien, au contraire qu'il comporte une pluralité p (p supérieur à 2) d'échancrures 7.

Les figures représentent la réalisation à deux échancrures 7.

L'échancrure 7 est réalisée dans l'intégralité de l'épaisseur de la plaque 2a qu'elle traverse de part en part.

L'échancrure 7 comporte en premier lieu, dirigée vers l'axe Q, une ouverture radiale 8 qui fait communiquer l'échancrure 7 avec le trou 5.

L'échancrure 7 comporte en second lieu, s'ouvrant dans la direction axiale D, une première et une seconde ouvertures axiales 9a et 9b, d'un côté et de l'autre, de la plaque 2a, situées vers les grandes faces respectives 4a et 4b.

L'ouverture 8 est qualifiée de « radiale » car elle est dirigée vers l'axe Q.

Les ouvertures 9a et 9b sont qualifiées d'« axiales » car elles s'ouvrent dans la direction axiale D.

L'échancrure 7 comporte également un chant périphérique 10 qui limite l'échancrure 7 et correspond à son contour et donc à celui des ouvertures axiales 9a et 9b.

Le chant 10 est profilé dans la direction axiale D. Il est ouvert pour former l'ouverture radiale 8.

Le chant 10 comporte un premier bord et un second bord 11a et 11b, vers les première et seconde ouvertures 9a et 9b respectives. Ces bords 11a et 11b sont donc aussi ceux de l'échancrure 7 autour des ouvertures 9a et 9b. Ces bords 11a et 11b sont donc aussi ceux des ouvertures axiales 9a et 9b.

L'échancrure 7 comporte une ouverture radiale 8 rétrécie, de sorte que les deux parties du chant 10 adjacentes à l'ouverture radiale 8, de part et d'autre, forment des butées radiales 12. Ces deux parties sont les deux parties d'empennage 26b de l'échancrure 7 dont il est question par la suite.

L'élément intérieur 3 est localisé de façon médiane sur la platine 1.

L'élément intérieur 3 présente une tenue d'ensemble et il est au moins pour partie élastiquement déformable, assurant la fonction de filtrage de vibrations.

Dans une réalisation, l'élément intérieur 3 est en caoutchouc ou comporte du caoutchouc ou tout matériau équivalent concernant la déformation élastique.

L'élément intérieur 3 est de forme plate.

L'élément intérieur 3 est limité d'un côté et de l'autre, par deux grandes surfaces 13a et 13b.

L'élément intérieur 3 comporte un noyau central 14 de forme annulaire ménageant un passage traversant 15, d'axe Q limité par un chant intérieur annulaire 16. Le noyau 14 est par ailleurs limité par un chant extérieur 17.

Le passage 15 occupe une partie substantielle de l'élément intérieur 3, l'écartement radial entre les chants 16 et 17 étant assez faible, et le passage 15 ayant des dimensions en correspondance avec les dimensions transversales de l'élément E à supporter qui est destiné à être monté dans le passage 15.

Le chant intérieur 16 peut avoir un contour de forme simili polygonale, adapté au contour de l'élément E à supporter, comme une sorte de carré à coins cassés ou d'heptagone, ces formes n'étant pas limitatives.

Le chant extérieur 17 peut avoir un contour de plus ou moins analogue au contour du chant intérieur 16, comme un contour de forme simili polygonale, notamment comme une sorte de carré à coins cassés ou d'heptagone, ces formes n'étant pas limitatives.

Dans la réalisation représentée sur les figures, le chant extérieur 17 comporte trois renflements localisés 18, faisant partie intégrante de l'élément intérieur 3 et donc élastiquement déformable, participant à la fonction de filtrage de vibrations.

Chaque renflement 18 présente un chant extérieur 19 avec des parties saillantes et des parties en creux.

Lorsque les éléments extérieur 2 et intérieur 3 sont assemblés, et en l'absence de contraintes extérieures supérieures à un certain plafond, le chant extérieur 19 d'un renflement 18 est légèrement écarté radialement du chant intérieur 6 de l'élément extérieur 2.

L'invention n'est pas limitée à cette réalisation à trois renflements 18. Il peut être envisagé un nombre plus grand ou plus petit de renflements, et éventuellement l'absence de renflement. D'autre part, au lieu d'un renflement multiple comme précédemment décrit, il peut être envisagé un renflement simple.

L'élément intérieur 3 comporte deux bras 20 étendus sensiblement radialement par rapport à l'axe Q vers l'extérieur du noyau 14, c'est-à-dire vers l'élément extérieur 2. On désigne par R, l'axe radial du bras 20.

Les deux bras 20 sont disposés dans la réalisation représentée sur les figures avec un écartement angulaire par rapport à l'axe Q, de l'ordre de 90°, s'étendant à partir de deux angles extérieurs du noyau 14.

Ces deux bras 20 sont analogues et pour cette raison la description est faite pour l'un quelconque des deux.

L'invention n'est pas limitée à cette réalisation à deux bras 20. Il peut être envisagé que l'élément intérieur 3 ne comporte qu'un seul bras 20 ou bien, au contraire qu'il comporte une pluralité p (p supérieur à 2) de bras 20.

Dans ce cas, il est prévu pour chaque bras 20 une échancrure 7 conjuguée.

Dans le cas de plusieurs bras 20, il peut être prévu un renflement localisé 18 entre deux bras 20 adjacents.

Les figures représentent la réalisation à deux bras 20.

Un bras 20 comporte une partie extrême proximale 21 de raccordement avec le noyau 14 et une partie extrême distale présentant une protubérance terminale 22.

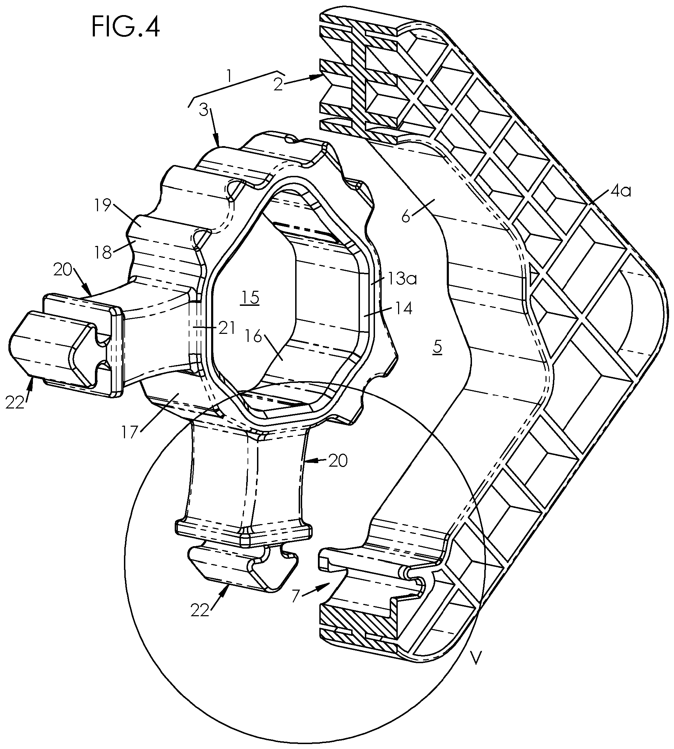

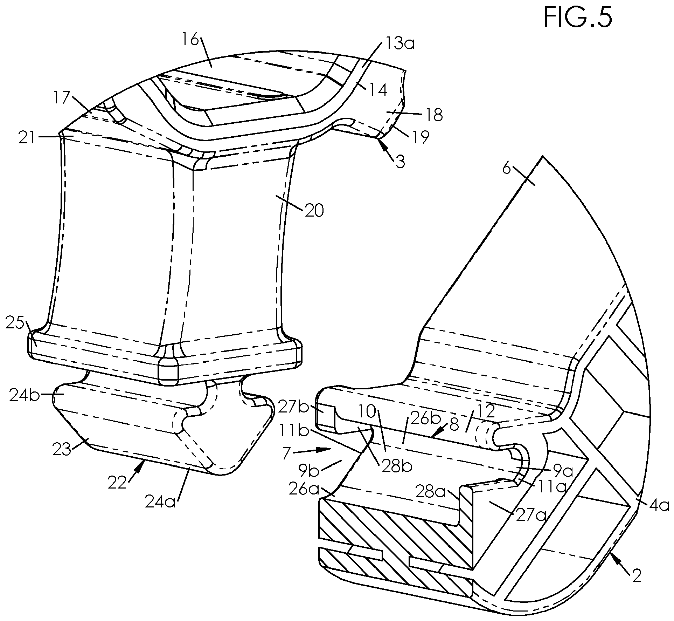

Comme le montrent notamment les FIG.4 et FIG.5, la protubérance 22, qui comporte un chant périphérique 23, se présente sous la forme d'une pointe arrondie, dirigée vers l'extérieur, avec, en se rapprochant de l'axe Q, une partie en pointe 24a, deux parties d'empennage 24b disposées sensiblement dans un plan transversal à l'axe radial R du bras 20, et une contracture 24c, amincie. Précédant la protubérance 22, est un renflement 25, disposé sensiblement dans un plan transversal à l'axe radial R du bras 20.

L'échancrure 7 et la protubérance 22 conjuguées sont aptes et destinées à coopérer mutuellement, lorsque la platine 1 est montée, la protubérance 22 étant alors logée dans l'échancrure 7 conjuguée avec complémentarité de leurs formes, le chant 23 de la protubérance 22 épousant largement - avec contact substantiel et même application ferme - le chant 10 de l'échancrure 7, et cela compte tenu de la combinaison rigidité de l'élément extérieur 2 - déformabilité élastique de la protubérance 22 et de la correspondance dimensionnelle entre l'échancrure 7 et la protubérance 22.

Lorsque la platine 1 est montée, les éléments extérieur 2 et intérieur 3 sont associés entre eux et ne peuvent être dissociés. L'élément intérieur 3 est alors est logé dans le trou 5, alors que la protubérance 22 est logée dans l'échancrure 7 conjuguée, comme il vient d'être exposé.

Par suite, l'échancrure 7 se présente sous la forme d'une pointe arrondie complémentaire de celle de la protubérance 22. Ainsi, le chant 10 de l'échancrure 7 comporte une partie en pointe 26a et deux parties d'empennage 26b disposées sensiblement dans un plan transversal au plan médian de l'échancrure, lequel est un plan radial passant par l'axe Q. A la contracture 24c de la protubérance 22 correspond l'ouverture radiale 8. Quant au renflement 25, il est disposé hors de l'échancrure vers l'ouverture radiale 8.

Les deux parties d'empennage 26b de l'échancrure 7 forment les butées radiales 12 empêchant la protubérance 22 de sortir de l'échancrure 7 en direction radiale, vers l'axe Q.

Dans la réalisation représentée sur les figures, l'élément extérieur 2 et l'élément intérieur 3 ont des épaisseurs en direction axiale D identiques ou voisines. Chacune des deux grandes faces 4a, 4b, de l'élément extérieur 2 et la surface homologue 13a, 13b, de l'élément intérieur 3 sont coplanaires ou situées dans deux plans voisins.

Dans une réalisation possible, la platine s'inscrit dans une enveloppe parallélépipédique plate de l'ordre de 5 cm à 10 cm de côté et de 1 cm à 3 cm d'épaisseur. Le trou 5 peut avoir un diamètre de l'ordre de 5 cm tandis que le passage 15 peut avoir un diamètre de l'ordre de 3 cm. Ces données ne sont pas limitatives.

Etant donné les sollicitations de l'élément intérieur 3 par rapport à l'élément extérieur 2, notamment du fait des vibrations, il importe que les éléments 2 et 3 ne puissent être dissociés.

A cette fin, l'invention prévoit des dispositions constructives autres que le simple emmanchement, peu efficace, le moulage bi matière, ou le collage connus de l'état de la technique.

Ces dispositions consistent en la prévision sur l'élément extérieur 2 de zones actives de blocage judicieusement disposées contre lesquelles une protubérance 22 logée dans l'échancrure 7 conjuguée comme il a été exposé précédemment, vient en butée de sorte à empêcher la protubérance 22 de sortir de l'échancrure 7.

Les deux parties d'empennage 24b de l'échancrure 7 prévues sur l'élément extérieur 2 forment de telles zones actives de blocage en direction radiale et vers l'axe Q.

En vue du blocage dans la direction axiale D, il est prévu, faisant corps avec l'élément extérieur 2, un premier moyen de blocage axial vers l'extérieur 27a et un second moyen de blocage axial vers l'extérieur 27b. Par extérieur, il faut comprendre ici que la protubérance est bloquée dans la direction axiale D vers l'extérieur de l'élément extérieur 2.

Le premier moyen de blocage axial vers l'extérieur 27a et le second moyen de blocage axial vers l'extérieur 27b, sont parfois dénommés par ellipse « premier moyen de blocage 27a » et « second moyen de blocage 27b », tandis que l'expression « moyen de blocage » désigne l'un quelconque du premier moyen de blocage 27a ou du second moyen de blocage 27b.

Le premier moyen de blocage 27a et le second moyen de blocage 27b sont situés respectivement vers les deux grandes faces 4a et 4b.

Le premier moyen de blocage 27a et le second moyen de blocage 27b ont des zones actives de blocage respectives 28a et 28b qui sont écartées l'une de l'autre en direction axiale D d'une distance en correspondance avec l'épaisseur de la protubérance 22 en direction axiale D.

Les zones actives 28a et 28b sont, respectivement, disposées au droit, dans la direction axiale D, de la première ouverture axiale 9a et de la seconde ouverture axiale 9b de l'échancrure 7, caractérisée en ce que les projections sur le plan principal du premier moyen (27a) de blocage et du second moyen (27b) de blocage sont au moins partiellement décalées l'une de l'autre, plus particulièrement totalement ou presque totalement décalées l'une de l'autre, plus spécialement écartées l'une de l'autre.

Par suite, une fois la protubérance 22 logée dans l'échancrure 7 conjuguée, au contact de son chant 10, les deux grandes surfaces 13a et 13b de la protubérance 22 viennent en butée contre les zones actives 28a et 28b des moyens de blocage 27a et 27b de sorte à empêcher la protubérance 22 de sortir de l'échancrure 7 par les ouvertures axiales 9a et 9b.

Les ouvertures axiales 9a et 9b sont découvertes et accessibles en direction axiale D dans une mesure qui permet l'introduction de la protubérance 22, moyennant sa compression, dans l'échancrure 7.

Les ouvertures axiales 9a et 9b sont masquées en direction axiale D par les moyens de blocage 27a et 27b, dans une mesure qui permet d'assurer le blocage en butée en direction axiale.

Par suite, les ouvertures axiales 9a et 9b sont découvertes et accessibles et masquées moyennant un compromis dépendant notamment de la déformation élastique de l'élément intérieur, de la forme et des dimensions de l'échancrure 7 et de la protubérance 22.

Par exemple, la première ouverture axiale 9a, la seconde ouverture axiale 9b de l'échancrure 7 est découverte et accessible en direction axiale D pour au moins 60%, plus particulièrement au moins 70%, plus spécialement au moins 80% de son aire. Et la première ouverture axiale 9a, la seconde ouverture axiale 9b de l'échancrure 7 est masquée en direction axiale D par le premier moyen de blocage 27a, le second moyen de blocage 27b, pour au plus 40%, plus particulièrement au plus 30%, plus spécialement au plus 20% de son aire.

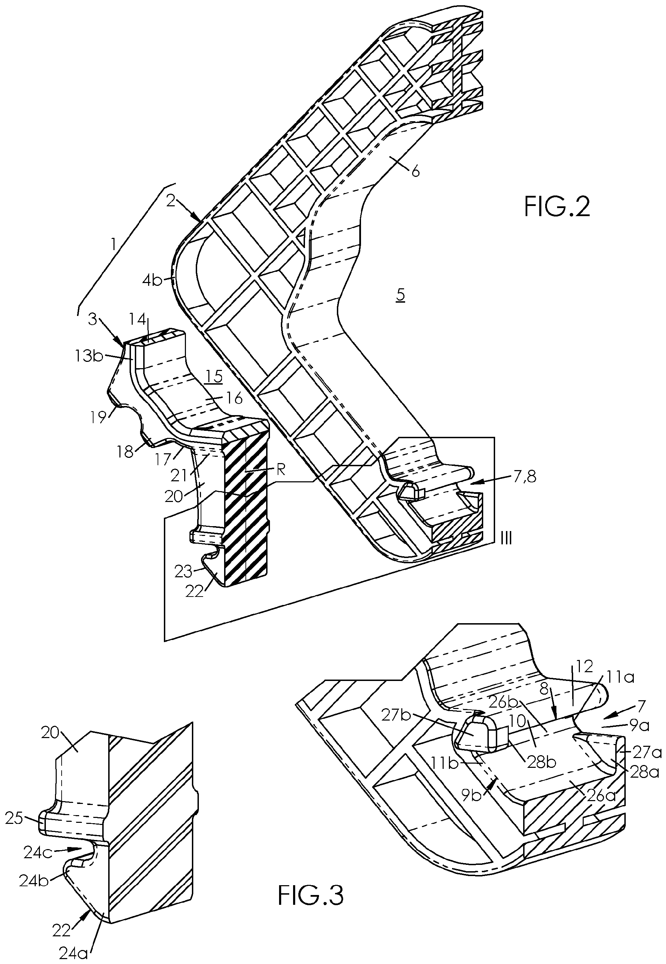

Comme le montrent les figures 3 et 5, notamment, les projections sur le plan principal P du premier moyen de blocage 27a et du second moyen de blocage 27b sont totalement décalées l'une de l'autre et même écartées l'une de l'autre. Plus généralement, ces projections sont au moins partiellement décalées l'une de l'autre.

La zone active 28a, 28b du premier moyen de blocage 27a ou du second moyen de blocage 27b est attenante au bord 11a, 11b, de l'ouverture axiale 9a, 9b, conjuguée.

Dans la réalisation représentée sur les figures (voir notamment les figures 2 à 5), la zone active 28a, 28b du premier moyen de blocage 27a ou du second moyen de blocage 27b est attenante à une portion du bord 11a, 11b, de l'ouverture axiale 9a, 9b, conjuguée, au plus égale à 40% de la longueur de ce bord. Plus particulièrement, elle est au plus égale à 30%. Plus spécialement, elle est au plus égale à 20%.

Dans la réalisation représentée sur les figures, l'un des moyens de blocage, par exemple le moyen de blocage 27a, est en une partie et l'autre des moyens de blocage, par exemple le moyen de blocage 27b, est en deux parties. Ainsi, la partie unique du moyen de blocage 27a est attenante à la partie en pointe 26a de l'échancrure 7, tandis que les deux parties, analogues, du moyen de blocage 27b sont attenantes aux parties d'empennage 26b de l'échancrure 7.

L'invention n'est pas limitée à cette réalisation. Il peut être envisagé, plus généralement, que l'un ou l'autre - ou l'un et l'autre - des moyens de blocage 27a, 27b est en une partie ou que l'un ou l'autre - ou l'un et l'autre - des moyens de blocage 27a, 27b est en plusieurs parties.

Dans la réalisation représentée sur les figures, un moyen de blocage 27a, 27b, comprend une zone active 28a, 28b qui est surfacique, avec contact avec la protubérance 22 sur sa grande surface conjuguée 13a, 13b, sans pénétration ou sans pénétration substantielle. Une telle zone active 28a, 28b surfacique se présente par exemple sous la forme d'une surface lisse, orthogonale à la direction axiale D.

L'invention n'est pas limitée à cette réalisation. Il peut être envisagé, plus généralement, qu'un moyen de blocage 27a, 27b comprend une zone active 28a, 28b qui est ponctuelle ou linéaire, ou bien qui est une combinaison d'une zone active surfacique, ponctuelle, linéaire. Par ailleurs, il peut être envisagé que le contact entre une zone active 28a, 28b et la protubérance 22 est un contact sur sa grande surface conjuguée 13a, 13b, avec pénétration substantielle dans cette surface.

Une zone active 28a, 28b ponctuelle est réalisée par exemple sous la forme de picots d'étendant dans la direction axiale D. Une zone active 28a, 28b linéaire est réalisée par exemple sous la forme d'une saillie allongée dans un plan parallèle au plan principal.

Dans la réalisation représentée sur les figures, un moyen de blocage 27a, 27b, est agencé de façon sensiblement symétrique par rapport à un plan radial médian du bras 20, de la protubérance 22 et de l'échancrure 7, passant par l'axe radial R du bras 20. Mais l'invention n'est pas limitée à cette réalisation.

Comme le montrent les FIG.3 et FIG.5, notamment, la partie ou l'une des parties d'un moyen de blocage 27a, 27b est une excroissance en languette saillante, mince et rigide de l'élément extérieur 3 située vers sa grande face conjuguée 4a, 4b.

Par « languette saillante et mince », il faut comprendre un profil mince, allongé saillant du chant 10 de l'échancrure 7.

Une telle languette fait partie intégrante de l'élément extérieur 3 pour être fabriquée avec lui d'un seul tenant.

Dans la réalisation représentée sur les FIG.3 et FIG.5, notamment, le moyen de blocage 27a - en une seule partie - est une excroissance en languette ayant en élévation axiale (selon la direction axiale D) un contour de forme simili polygonale comme un triangle. Et le moyen de blocage 27b - en deux parties - est une excroissance en languette ayant en élévation axiale (selon la direction axiale D) un contour de forme simili polygonale comme un rectangle, un trapèze, pour chaque partie. L'invention n'est pas limitée à cette réalisation.

Dans la réalisation représentée sur les FIG.3 et FIG.5, notamment, le moyen de blocage 27a - en une seule partie - est une excroissance en languette dont la face extérieure est coplanaire ou sensiblement coplanaire de sa grande face conjuguée 4a de l'élément extérieur 2. Et le moyen de blocage 27b est une excroissance en languette dont la face extérieure saille légèrement vers l'extérieur de sa grande face conjuguée 4b de l'élément extérieur 2.

L'invention n'est pas limitée à cette réalisation. Il peut être envisagé, plus généralement, que pour chacun des deux moyens de blocage 27a, 27b, la face extérieure de la languette soit coplanaire ou sensiblement coplanaire de sa grande face conjuguée 4a, 4b. Il peut également être envisagé que pour chacun des deux moyens de blocage 27a, 27b, la face extérieure de la languette fasse saillie légèrement vers l'extérieur de sa grande face conjuguée 4a, 4b.

Il peut aussi être envisagé, que pour un moyen de blocage en une seule partie, l'excroissance en languette ait sa face extérieure qui saille légèrement vers l'extérieur de sa grande face conjuguée.

Et il peut aussi être envisagé qu'un moyen de blocage en une deux (ou plus) parties, l'excroissance en languette ait sa face extérieure coplanaire ou sensiblement coplanaire de sa grande face conjuguée.

Dans la réalisation représentée sur les FIG.3 et FIG.5, notamment, le moyen de blocage 27a - en une seule partie - est une excroissance en languette dont le plan enveloppe de la face intérieure de la zone active 28a est écarté vers l'intérieur par rapport au plan de la grande face conjuguée 4a de l'élément extérieur 2. Et le moyen de blocage 27b - en deux parties - est une excroissance en languette dont le plan enveloppe de la face intérieure de la zone active 28b est situé dans ou sensiblement dans le plan de la grande face conjuguée 4b de l'élément extérieur 2.

L'invention n'est pas limitée à cette réalisation. Il peut être envisagé, plus généralement, que pour chacun des deux moyens de blocage 27a, 27b, le plan enveloppe de la face intérieure de la zone active soit écarté vers l'intérieur par rapport au plan de sa grande face conjuguée 4a, 4b. Il peut également être envisagé que pour chacun des deux moyens de blocage 27a, 27b, le plan enveloppe de la face intérieure de la zone active soit situé dans ou sensiblement dans le plan de sa grande face conjuguée 4a, 4b.

Il peut aussi être envisagé, que pour un moyen de blocage en une seule partie, le plan enveloppe de la face intérieure de la zone active soit situé dans ou sensiblement dans le plan de sa grande face conjuguée

Et il peut aussi être envisagé qu'un moyen de blocage en une deux (ou plus) parties, le plan enveloppe de la face intérieure de la zone active soit écarté vers l'intérieur par rapport au plan de sa grande face conjuguée.

Dans la réalisation représentée sur les figures où il est prévu une pluralité p d'échancrures 7, une même pluralité p de bras 20 à protubérance 22, il existe une même pluralité p de premiers moyens de blocage 27a et de seconds moyens de blocage 27b. En particulier p égale deux.

Dans ce même cas, il peut être prévu que les différents premiers moyens de blocage 27a de la pluralité p de premiers moyens de blocage 27a et les différents seconds moyens de blocage 27b de la pluralité de seconds moyens de blocage 27b sont situés, respectivement, vers la première grande face 4a et la seconde grande face 4b.

L'invention porte aussi sur l'élément extérieur 2 en tant que tel qui peut être fabriqué par moulage au moyen d'un moule à tiroirs, dans la mesure où les projections sur le plan principal P du premier moyen de blocage 27a et du second moyen de blocage 27b sont totalement décalées l'une de l'autre, en particulier écartées l'une de l'autre. L'impératif de pouvoir réaliser l'élément extérieur 2 par moulage au moyen d'un moule à tiroirs conditionne la forme et la disposition données aux moyens de blocage 27a, 27b.

S'agissant du procédé de réalisation d'une platine 1 telle qu'elle a été décrite, on réalise ou on dispose d'un élément extérieur 2, on réalise ou on dispose d'un élément intérieur 3, puis on loge le noyau central 14 de l'élément intérieur 3 dans le trou 5 de l'élément extérieur 2, on comprime élastiquement la protubérance 22 et on la loge dans l'échancrure conjuguée 7. Puis, on laisse la protubérance 22 se détendre élastiquement de sorte à être bloquée en direction axiale D par les zones actives 28a, 28b des moyens de blocage 27a, 27b.

Selon une réalisation particulière du procédé, on comprime élastiquement la protubérance 22 et on la loge dans l'échancrure conjuguée 7, par passage à force en direction axiale D, de sorte à passer au-delà du moyen de blocage 27a, 27b avec lequel elle interfère.

## Revendications

1. Platine support (1) avec filtrage de vibrations d'un élément (E) à supporter, qui s'étend parallèlement à un plan (P) principal orthogonal à une direction (D) axiale, telle que :
- un élément (2) extérieur, périphérique, rigide, en forme de plaque, est limité par deux grandes faces (2a, 2b) et comporte un trou (5) traversant limité par un chant (6) intérieur annulaire comportant au moins une échancrure (7) localisée ayant une ouverture (8) radiale, une première et une seconde ouvertures (9a, 9b) axiales vers les grandes faces (2a, 2b) respectives, un chant (10) périphérique s'étendant en direction axiale ayant un premier et un second bords (11a, 11b) vers les première et seconde ouverture (9a, 9b), respectives,
- un élément (3) intérieur, médian, ayant une tenue d'ensemble et au moins pour partie élastiquement déformable, de forme plate, est limité par deux grandes surfaces (13a, 13b) et comporte un noyau (14) central de forme annulaire avec un passage (15) traversant limité par un chant (16) extérieur, et au moins un bras (20) étendu sensiblement radialement avec une protubérance (22) terminale,
- l'élément (3) intérieur est logé dans le trou (5) alors que la protubérance (22) est logée dans l'échancrure (7) conjuguée, au contact de son chant (10) par complémentarité de forme, et que l'élément (2) extérieur et l'élément (3) intérieur forment un ensemble indissociable,
- faisant corps avec l'élément (2) extérieur, un premier moyen (27a) de blocage axial vers l'extérieur et un second moyen (27b) de blocage axial vers l'extérieur, situés respectivement vers les deux grandes faces (2a, 2b), ont des zones (28a, 28b) actives de blocage respectives écartées en direction axiale d'une distance en correspondance avec l'épaisseur de la protubérance (22) en direction axiale,
- les zones (28a, 28b) actives du premier moyen (27a) de blocage et du second moyen (27b) de blocage sont, respectivement, disposées au droit, dans la direction axiale, de la première ouverture (9a) et de la seconde ouverture (9b) de l'échancrure (7),
- une fois la protubérance (22) logée dans l'échancrure (7) conjuguée, au contact de son chant, les deux grandes surfaces de la protubérance (22) sont bloquées en direction axiale par les zones actives (28a, 28b) des moyens (27a, 27b) de blocage,
**caractérisée en ce que** les projections sur le plan principal du premier moyen (27a) de blocage et du second moyen (27b) de blocage sont au moins partiellement décalées l'une de l'autre, plus particulièrement totalement ou presque totalement décalées l'une de l'autre, plus spécialement écartées l'une de l'autre.

2. Platine support (1) avec filtrage de vibrations selon la revendication 1, dans laquelle la première ouverture (9a), respectivement la seconde ouverture (9b) de l'échancrure (7) est découverte et accessible en direction axiale D pour au moins 60%, plus particulièrement au moins 70%, plus spécialement au moins 80% de son aire, et masquée en direction axiale D par le premier moyen (27a) de blocage, respectivement le second moyen (27b) de blocage, pour au plus 40%, plus particulièrement au plus 30%, plus spécialement au plus 20% de son aire.

3. Platine support (1) avec filtrage de vibrations selon l'une des revendications 1 et 2, dans laquelle la zone (28a ; 28b) active du premier moyen (27a) de blocage ou du second moyen (27b) de blocage est attenante au bord de l'ouverture axiale conjuguée.

4. Platine support (1) avec filtrage de vibrations selon l'une des revendications 1 à 3, dans laquelle chacune des deux grandes faces de l'élément (2) extérieur et la surface homologue de l'élément (3) intérieur sont coplanaires ou situées dans deux plans voisins.

5. Platine support (1) avec filtrage de vibrations selon l'une des revendications 1 à 4, dans laquelle un moyen (27a ; 27b) de blocage comprend une zone active ponctuelle, ou une zone active linéaire, ou une zone active surfacique, ou une combinaison de celles-ci, avec contact avec la protubérance (22) vers sa grande surface conjuguée.

6. Platine support (1) avec filtrage de vibrations selon l'une des revendications 1 à 5, dans laquelle un moyen (27a ; 27b) de blocage est agencé de façon sensiblement symétrique par rapport à un plan radial médian du bras (20), de la protubérance et de l'échancrure (7).

7. Platine support (1) avec filtrage de vibrations selon l'une des revendications 1 à 6, dans laquelle la partie ou l'une des parties d'un moyen (27a) de blocage est une excroissance en languette saillante, mince et rigide de l'élément extérieur vers sa grande face conjuguée.

8. Platine support (1) avec filtrage de vibrations selon l'une des revendications 1 à 7, dans laquelle une échancrure (7) comporte une ouverture radiale rétrécie, de sorte que les deux parties du chant de l'échancrure adjacentes à l'ouverture radiale, de part et d'autre, forment des butées radiales, de sorte qu'une fois la protubérance (22) logée dans l'échancrure (7) conjuguée, elle est bloquée radialement vers l'intérieur et ne peut se désengager radialement de l'échancrure (7).

9. Platine support (1) avec filtrage de vibrations selon l'une des revendications 1 à 8, qui comporte une pluralité p d'échancrures (7), une même pluralité p de bras (20) à protubérance et une même pluralité p de premiers moyens (27a) de blocage et de seconds moyens (27b) de blocage, en particulier p égale deux.

10. Platine support (1) avec filtrage de vibrations selon l'une des revendications 1 à 9, dans laquelle le chant extérieur du noyau (14) central comporte au moins un renflement localisé, simple ou multiple qui, en l'absence de contraintes extérieures supérieures à un certain plafond, est légèrement écarté du chant intérieur de l'élément (3) extérieur.

11. Platine support (1) avec filtrage de vibrations selon l'une des revendications 1 à 10, dans laquelle l'élément (2) extérieur et l'élément (3) intérieur ont des épaisseurs en direction axiale identiques ou voisines.

12. Platine support (1) avec filtrage de vibrations selon l'une des revendications 1 à 11, dans laquelle un bras (20) de l'élément intérieur comporte un renflement (25) précédant la protubérance (22).

13. Elément (2) spécialement apte et destiné à constituer l'élément (2) extérieur d'une platine support (1) avec filtrage de vibrations selon l'une des revendications 1 à 12, qui :
- est rigide, en forme de plaque et s'étend parallèlement à un plan (P) principal orthogonal à une direction (D) axiale,
- est limité par deux grandes faces (2a, 2b) et comporte un trou (5) traversant limité par un chant (6) intérieur annulaire comportant au moins une échancrure (7) localisée ayant une ouverture (8) radiale, une première et une seconde ouvertures (9a, 9b) axiales vers les grandes faces respectives, un chant (10) périphérique s'étendant en direction axiale ayant un premier et un second bords (11a, 11b) vers les première et seconde ouverture, respectives,
- comporte, faisant corps avec lui, un premier moyen (27a) de blocage axial vers l'extérieur et un second moyen (27b) de blocage axial vers l'extérieur, situés respectivement vers les deux grandes faces (2a, 2b), et ont des zones actives (28a, 28b) de blocage respectives écartées en direction axiale, les zones actives (28a, 28b) du premier moyen de blocage et du second moyen de blocage étant, respectivement, disposées au droit, dans la direction axiale, de la première ouverture et de la seconde ouverture de l'échancrure (7), **caractérisée en ce que** les projections sur le plan principal du premier moyen (27a) de blocage et du second moyen (27b) de blocage sont au moins partiellement décalées l'une de l'autre, plus particulièrement totalement ou presque totalement décalées l'une de l'autre, plus spécialement écartées l'une de l'autre.

14. Procédé de réalisation d'une platine support avec filtrage de vibrations selon l'une des revendications 1 à 12, dans lequel :
- on réalise ou on dispose d'un élément (2) extérieur,
- on réalise ou on dispose d'un élément (3) intérieur,
- on loge le noyau (14) central de l'élément (3) intérieur dans le trou (5) de l'élément (2) extérieur, on comprime élastiquement la protubérance (22) et on la loge dans l'échancrure (7) conjuguée,
- on laisse la protubérance (22) se détendre élastiquement de sorte à être bloquée en direction axiale par les zones (28a ; 28b) actives des moyens (27a ; 27b) de blocage.

## Patentansprüche

1. Schwingungsdämpfende Trägerplatte (1) eines zu stützenden Elements (E), die sich parallel zu einer Hauptebene (P) rechtwinklig zu einer axialen Richtung (D) erstreckt, so dass:
- ein äußeres, peripheres, starres, plattenförmiges Element (2) durch zwei Hauptflächen (2a, 2b) begrenzt ist und ein Durchgangsloch (5) umfasst, das durch eine ringförmige innere Kante (6) abgegrenzt ist, die mindestens eine örtlich begrenzte Einkerbung (7) mit einer radialen Öffnung (8) aufweist, eine erste und eine zweite axiale Öffnung (9a, 9b) zu den jeweiligen Hauptflächen (2a, 2b), eine sich axial erstreckende Umfangskante (10) mit einem ersten und einem zweiten Rand (11a, 11b) jeweils zur ersten und zweiten Öffnung (9a, 9b) hin,
- ein flaches, zentrales inneres Element (3), dessen Gesamtfestigkeit dergestalt ist, dass es zumindest teilweise elastisch verformbar ist, durch zwei Hauptflächen (13a, 13b) begrenzt ist und einen ringförmigen zentralen Kern (14) mit einem von einer äußeren Kante (16) begrenzten Durchgang (15) und mindestens einem sich im Wesentlichen radial erstreckenden Arm (20) mit einem Vorsprung (22) am Ende umfasst,
- das innere Element (3) im Loch (5) aufgenommen ist, während der Vorsprung (22) in der passenden Einkerbung (7) sitzt in Kontakt mit deren Kante (10) durch Formschluss, und das äußere Element (2) und das innere Element (3) eine untrennbare Einheit bilden,
- wobei ein erstes Mittel (27a) mit axialer Blockierung nach außen und ein zweites Mittel (27b) mit axialer Blockierung nach außen, die fest mit dem äußeren Element (2) verbunden und jeweils in Richtung der beiden Hauptflächen (2a, 2b) angeordnet sind, aktive Blockierbereiche (28a, 28b) aufweisen, die in axialer Richtung in einem Abstand zueinander stehen, der der Dicke des Vorsprungs (22) in axialer Richtung entspricht,
- die aktiven Bereiche (28a, 28b) des ersten Blockiermittels (27a) und des zweiten Blockiermittels (27b) jeweils an der ersten Öffnung (9a)und an der zweiten Öffnung (9b) der Einkerbung (7) in axialer Richtung angeordnet sind,
- sobald der Vorsprung (22) in der passenden Einkerbung (7) sitzt deren Kanten berührt, die beiden Hauptflächen des Vorsprungs (22) in axialer Richtung durch die aktiven Bereiche (28a, 28b) der Blockiermittel (27a, 27b) blockiert werden,
**dadurch gekennzeichnet, dass** die Vorsprünge auf der Hauptebene des ersten Blockiermittels (27a) und des zweiten Blockiermittels (27b) zumindest teilweise gegeneinander versetzt, oder aber vollständig oder nahezu vollständig gegeneinander versetzt, oder aber zueinander beabstandet sind.

2. Schwingungsdämpfende Trägerplatte (1) nach Anspruch 1, bei der die erste Öffnung (9a) bzw. die zweite Öffnung (9b) der Einkerbung (7) in axialer Richtung D zu mindestens 60 %, oder aber zu mindestens 70 %, oder aber durch das erste Blockiermittel (27a) bzw. das zweite Blockiermittel (27b) zu mindestens 80 % ihrer Fläche unbedeckt und zugänglich sind und zu höchstens 40 %, oder aber zu höchstens 30 %, oder aber zu höchstens 20 % ihrer Fläche abgedeckt sind.

3. Schwingungsdämpfende Trägerplatte (1) nach einem der Ansprüche 1 und 2, bei der der aktive Bereich (28a, 28b) des ersten Blockiermittels (27a) oder des zweiten Blockiermittels (27b) an den Rand der passenden axialen Öffnung angrenzt.

4. Schwingungsdämpfende Trägerplatte (1) nach einem der Ansprüche 1 bis 3, bei der jede der beiden Hauptflächen des äußeren Elements (2) und die Gegenfläche des inneren Elements (3) koplanar sind oder auf zwei benachbarten Ebenen liegen.

5. Schwingungsdämpfende Trägerplatte (1) nach einem der Ansprüche 1 bis 4, bei der ein Blockiermittel (27a, 27b) einen punktförmigen, einen linearen oder einen flächenförmigen aktiven Bereich oder eine Kombination davon umfasst, wobei ein Kontakt mit dem Vorsprung (22) in Richtung ihrer passenden Hauptfläche besteht.

6. Schwingungsdämpfende Trägerplatte (1) nach einem der Ansprüche 1 bis 5, in der ein Blockiermittel (27a, 27b) im Wesentlichen symmetrisch zu einer radialen Mittelebene des Arms (20), des Vorsprungs und der Einkerbung (7) angeordnet ist.

7. Schwingungsdämpfende Trägerplatte (1) nach einem der Ansprüche 1 bis 6, in der der Teil oder einer der Teile eines Blockiermittels (27a) ein vorstehender, dünner und starrer zungenartiger Vorsprung des äußeren Elements zu seiner passenden großen Fläche hin ist.

8. Schwingungsdämpfende Trägerplatte (1) nach einem der Ansprüche 1 bis 7, bei der eine Einkerbung (7) eine verengte radiale Öffnung umfasst, so dass die beiden an die radiale Öffnung angrenzenden Teile der Kante der Einkerbung beidseitig radiale Anschläge bilden, so dass der Vorsprung (22), nachdem er in der passenden Einkerbung (7) sitzt, radial nach innen blockiert wird und nicht radial aus der Einkerbung (7) ausrasten kann.

9. Schwingungsdämpfende Trägerplatte (1) nach einem der Ansprüche 1 bis 8 mit einer Vielzahl p von Einkerbungen (7), einer gleichen Vielzahl p von Armen (20) mit Vorsprung und einer gleichen Vielzahl p erster Blockiermittel (27a) und zweiter Blockiermittel (27b), wobei p insbesondere gleich zwei ist.

10. Schwingungsdämpfende Trägerplatte (1) nach einem der Ansprüche 1 bis 9, bei der die äußere Kante des zentralen Kerns (14) mindestens eine einfache oder mehrfache, örtlich begrenzte Ausbuchtung aufweist, die bei Ausbleiben äußerer Beanspruchungen oberhalb einer bestimmten Grenze geringfügig von der inneren Kante des äußeren Elements (3) beabstandet ist.

11. Schwingungsdämpfende Trägerplatte (1) nach einem der Ansprüche 1 bis 10, bei der das äußere Element (2) und das innere Element (3) in axialer Richtung die gleichen oder ähnliche Dicken aufweisen.

12. Schwingungsdämpfende Trägerplatte (1) nach einem der Ansprüche 1 bis 11, bei der ein Arm (20) des Innenelements eine dem Vorsprung (22) vorgelagerte Ausbuchtung (25) umfasst.

13. Element (2), das speziell dazu geeignet und bestimmt ist, das äußere Element (2) einer schwingungsdämpfenden Trägerplatte (1) nach einem der Ansprüche 1 bis 12 zu bilden, das:
- starr und plattenförmig ist und sich parallel zu einer Hauptebene (P) rechtwinklig zu einer axialen Richtung (D) erstreckt,
- durch zwei große Flächen (2a, 2b) begrenzt ist und ein Durchgangsloch (5) umfasst, das durch eine ringförmige innere Kante (6) begrenzt ist, die mindestens eine örtlich begrenzte Einkerbung (7) mit einer radialen Öffnung (8) aufweist, eine erste und eine zweite axiale Öffnung (9a, 9b) zu den jeweiligen Hauptflächen hin, und eine sich axial erstreckende Umfangskante (10) mit einem ersten und einem zweiten Rand (11a, 11b) zur jeweiligen ersten und zweiten Öffnung hin,
- als Bestandteil derselben ein erstes axial nach außen gerichtetes Blockiermittel (27a) und ein zweites axial nach außen gerichtetes Blockiermittel (27b) umfasst, die jeweils zu den beiden Hauptflächen (2a, 2b) hin angeordnet sind und aktive Blockierbereiche (28a, 28b) aufweisen, die in axialer Richtung beabstandet sind, wobei die aktiven Bereiche (28a, 28b) des ersten und zweiten Blockiermittels jeweils in axialer Richtung rechtwinklig zur ersten und zur zweiten Öffnung der Einkerbung (7) angeordnet sind, **dadurch gekennzeichnet, dass** die Vorsprünge auf der Hauptebene des ersten Blockiermittels (27a) und des zweiten Blockiermittels (27b) zumindest teilweise gegeneinander versetzt, oder aber vollständig oder nahezu vollständig gegeneinander versetzt, oder aber zueinander beabstandet sind.

14. Verfahren zur Herstellung einer schwingungsdämpfenden Trägerplatte nach einem der Ansprüche 1 bis 12, bei dem:
- ein äußeres Element (2) hergestellt oder angeordnet wird,
ein inneres Element (3) hergestellt oder angeordnet wird,
- der zentrale Kern (14) des inneren Elements (3) in der Öffnung (5) des äußeren Elements (2) aufgenommen, der Vorsprung (22) elastisch zusammengedrückt und in der passenden Einkerbung (7) aufgenommen wird,
- man den Vorsprung (22) sich elastisch ausdehnen lässt, so dass er in axialer Richtung durch die aktiven Bereiche (28a, 28b) der Blockiermittel (27a; 27b) blockiert wird.

## Claims

1. Support plate (1) with vibration filtering of an element (E) to be supported, which extends parallel to a main plane (P) orthogonal to an axial direction (D), such that:
- an outer, peripheral, rigid, plate-shaped element (2) is bounded by two large faces (2a, 2b) and has a through hole (5) limited by an annular inner edge (6) comprising at least one localized notch (7) having a radial opening (8), a first and a second axial opening (9a, 9b) towards the respective large faces (2a, 2b), a peripheral edge (10) extending in the axial direction having first and second edges (1, 1a, 1b) towards the respective first and second opening (9a, 9b),
- an inner, median element (3) in one piece and at least part of which is elastically deformable, of flat shape, is limited by two large surfaces (13a, 13b) and comprises an annular central core (14) with a through passage (15) limited by an outer edge (16), and at least one arm (20) extended substantially radially with a terminal protuberance (22),
- the inner element (3) is housed in the hole (5) while the protrusion (22) is housed in the conjugated notch (7), in contact with its edge (10) by shape complementarity, and the outer element (2) and the inner element (3) form an inseparable unit,
- in conjunction with the outer element (2), a first outward axial locking means (27a) and a second outward axial locking means (27b), located respectively towards the two large faces (2a, 2b), have respective active locking zones (28a, 28b) spaced in the axial direction by a distance corresponding to the thickness of the axial protuberance (22),
- the active zones (28a, 28b) of the first locking means (27a) and the second locking means (27b) being, respectively, arranged, in the axial direction, in alignment with the first opening (9a) and the second opening (9b) of the notch (7),
- once the protuberance (22) is housed in the notch (7) and in contact with its edge, the two large surfaces of the protuberance (22) are blocked in the axial direction by the active zones (28a, 28b) of the blocking means (27a, 27b),
**characterized in that** the projections on the main plane of the first blocking means (27a) and the second blocking means (27b) are at least partially offset from each other, more particularly totally or almost totally offset from each other, more especially spaced from each other.

2. Support plate (1) with vibration filtering according to claim 1, in which the first opening (9a) or the second opening (9b) of the notch (7) is exposed and accessible in the axial direction D for at least 60%, more particularly at least 70%, more especially at least 80% of its area, and hidden in the axial direction D by the first blocking means (27a) or the second blocking means (27b), for at most 40%, more particularly at most 30%, more especially at most 20% of its area.

3. A support plate (1) with vibration filtering according to one of claims 1 and 2, wherein the active zone (28a, 28b) of the first blocking means (27a) or the second blocking means (27b) is adjacent to the edge of the combined axial opening.

4. Support plate (1) with vibration filtering according to one of claims 1 to 3, in which each of the two large faces of the outer element (2) and the homologous surface of the inner element (3) are coplanar or located in two adjoining planes.

5. A support plate (1) with vibration filtering according to one of claims 1 to 4, wherein a blocking means (27a, 27b) comprises a point active zone, or a linear active zone, or a surface active zone, or a combination thereof, with contact with the protuberance (22) towards its large conjugated surface.

6. A support plate (1) with vibration filtering according to one of claims 1 to 5, wherein a blocking means (27a, 27b) is arranged substantially symmetrically with respect to a median radial plane of the arm (20), the protuberance and the notch (7).

7. A support plate (1) with vibration filtering according to one of claims 1 to 6, wherein the part or one of the parts of a blocking means (27a) is a protruding, thin and rigid tab from the outer element to its large conjugated face.

8. Support plate (1) with vibration filtering according to one of claims 1 to 7, wherein a notch (7) has a narrowed radial opening, so that the two edge portions of the notch adjacent to the radial opening on either side form radial stops, so that once the notch (22) is housed in the combined notch (7), it is locked radially inward and cannot disengage radially from the notch (7).

9. Support plate (1) with vibration filtering according to one of claims 1 to 8, which comprises a plurality p of notches (7), a same plurality p of protruding arms (20) and a same plurality p of first locking means (27a) and second locking means (27b), in particular p equals two.

10. Support plate (1) with vibration filtering according to one of claims 1 to 9, in which the outer edge of the central core (14) has at least one single or multiple localized bulge which, in the absence of external stresses above a given limit, is slightly spaced from the inner edge of the outer element (3).

11. Support plate (1) with vibration filtering according to one of claims 1 to 10, wherein the outer and inner elements (2) and (3) have identical or near-identical axial thicknesses.

12. Support plate (1) with vibration filtering according to one of claims 1 to 11, wherein an arm (20) of the inner element has a bulge (25) preceding the protuberance (22).

13. Element (2) specially adapted and intended to constitute the external element (2) of a support plate (1) with vibration filtering according to one of claims 1 to 12, which:
- is rigid, plate-shaped and extends parallel to a main plane (P) orthogonal to an axial direction (D),
- is bounded by two large faces (2a, 2b) and has a through hole (5) bounded by an annular inner edge (6) having at least one localized notch (7) having a radial opening (8), first and second openings (9a, 9b) axial to the respective large faces, a peripheral edge (10) extending in the axial direction, having first and second edges (1, 1a, 1b) toward the respective first and second opening,
- comprises, integral with it, a first outward axial locking means (27a) and a second outward axial blocking means (27b), respectively located towards the two major faces (2a, 2b), and having respective active locking zones (28a, 28b) spaced in the axial direction, the active zones (28a, 28b) of the first blocking means and the second blocking means being, respectively, arranged in alignment, in the axial direction, with the first opening and the second opening of the notch (7), **characterized in that** the protuberances on the main plane of the first locking means (27a) and of the second locking means (27b) are at least partly offset with respect to one another, preferably totally or nearly totally offset with respect to one another, more specifically offset with respect to one another.

14. Method for producing a support plate with vibration filtering according to one of claims 1 to 12, in which:
- an external element (2) is manufactured or available,
an inner element (3) is manufactured or available,
- the central core (14) of the inner element (3) is accommodated in the hole (5) of the outer element (2), the protuberance (22) is elastically compressed and accommodated in the corresponding notch (7),
- the protuberance (22) is allowed to stretch elastically so as to lock it in the axial direction by the active zones (28a, 28b) of the locking means (27a, 27b).
